# NOUVEAU FASCICULE DE BREVET EUROPEEN

(11) **EP 1 447 831 B2**
(45) Date de publication et mention de la décision concernant l'opposition: **27.04.2016**
(45) Mention de la délivrance du brevet: 12.07.2006
(21) Numéro de dépôt: 04360011.3
(22) Date de dépôt: 10.02.2004
(51) Int. Cl.: H01H 83/10, H02H 9/04

(54) **Ensemble de protection contre les surtensions dues à la foudre**
Schutzvorrichtung gegen Blitzüberspannungen
Device for protecting against overvoltage due to lightning

(30) Priorité: 13.02.2003 FR 0301750
(43) Date de publication de la demande: 18.08.2004
(73) Titulaire: HAGER ELECTRO S.A.S. (société par Actions Simplifiée), 67210 Obernai (FR)
(72) Inventeur: Baumann, Eric, 67460 Souffelweyersheim (FR); Thomas, Christian, 78240 Chambourcy (FR)
(74) Mandataire: Nuss, Laurent

(56) Documents cités:
- EP-A- 0 046 545
- EP-A- 0 071 956
- EP-A- 0 130 851
- DE-A- 19 843 130
- DE-U1- 7 719 678
- FR-A1- 2 545 999
- GB-A- 2 010 613
- US-A- 5 321 574
- catalogue SOULE octobre 2001
- Fiche technique SOULE sur les cartouches débrochables
- Fiche nomenclature SOULE
- Schéma électrique des cartouches débrochables SOULE
- Catalogue OBO BETTERMANN octobre 1996
- brochure OBO BETTERMANN octobre 1997
- extraits du catalogue DEHN de mai 1996
- Extrait de la norme CEI61 643 - 1 février 1998

## Description

La présente invention concerne le domaine des appareillages électriques de sécurité équipant plus particulièrement les installations alimentées par le réseau de distribution public basse tension, notamment les appareillages de protection contre les surtensions dues à la foudre, et a pour objet un ensemble de protection destiné à cet effet.

L'invention propose plus particulièrement un ensemble réalisant la protection contre les court-circuits des parafoudres à base de varistances.

Actuellement, la protection contre les surtensions d'une installation électrique est fréquemment réalisée par l'intermédiaire d'un parafoudre à base de varistances. A cette protection sont systématiquement associées une protection contre les court-circuits et une protection thermique. L'ensemble de ces fonctions est réalisé par l'intermédiaire de dispositifs communément appelés déconnecteurs, conformément aux normes en vigueur. Ces déconnecteurs peuvent être intégrés au parafoudre ou être des dispositifs externes à ce dernier. En outre, une protection de la canalisation en dérivation, contre les surcharges et les court-circuits, est également requise en ce qui concerne le respect de la norme française en matière d'installation.

Dans un mode de raccordement traditionnel actuel, les moyens de protection connus sont raccordés entre conducteurs actifs et terres par liaison d'un moyen de protection contre les court-circuits et les surcharges et de protection de canalisation sur un conducteur émanant, par exemple, d'un disjoncteur de branchement et par raccordement en série, entre ce moyen de protection et la terre, d'un moyen parafoudre, déconnecteur thermique et de signalisation, ces moyens étant montés en amont de l'installation à protéger.

Ainsi, ces moyens garantissent une tension maximale de protection de l'installation Up sous une capacité nominale de décharge in, Up et in étant les performances de ce système.

Lors d'un emballement thermique dû au vieillissement et à l'augmentation du courant de fuite de la varistance du moyen parafoudre, une protection thermique déconnecte ladite varistance. Le moyen permettant cette première déconnexion est très souvent intégrée au moyen parafoudre et est réalisée sous la forme d'une soudure basse température entre deux contacts sous contrainte mécanique élastique. L'élévation de température de la varistance fait fondre la soudure et, du fait de la contrainte élastique s'exerçant sur l'un des contacts, la séparation des contacts s'effectue instantanément. Un moyen de signalisation visuel est généralement couplé mécaniquement ou électriquement à ce déconnecteur thermique pour indiquer la fin de vie de la varistance et la nécessité de son remplacement. Cette signalisation visuelle peut être remplacée ou être couplée à une signalisation à distance.

La protection contre les court-circuits protège l'ensemble de l'installation en aval contre une fin de vie dangereuse du parafoudre sous forme d'un court-circuit franc. Dans un tel cas, cette protection déconnecte ledit parafoudre de l'installation pour assurer la continuité de service de celle-ci. La déconnexion ainsi réalisée est obtenue par un fusible ou par un disjoncteur. Actuellement, la déconnexion par disjoncteur tend à se généraliser et ce disjoncteur protège également la canalisation en dérivation du parafoudre conformément à la norme d'installation française en vigueur.

Lorsque la deuxième déconnexion est réalisée à partir d'un disjoncteur, on se trouve en présence d'un schéma électrique, dans lequel la partie de protection de l'installation à protégermet en oeuvre un disjoncteur remplissant les fonctions de protection contre les court-circuits et les surintensités et un moyen parafoudre, déconnecteur thermique et signalisation raccordé entre la sortie du disjoncteur et la terre.

Une telle installation présente l'inconvénient d'être complexe et d'être la source de possibilités d'erreurs de câblage en découlant. De plus, cette installation écoulant des courants d'intensité de crête très importante, à savoir de l'ordre de 40 kA en onde 8/20 ou plus, l'inductance des câbles exerce un rôle important au niveau des performances de protection de l'installation. Il en résulte la nécessité de réaliser le câblage de manière très soignée, selon des règles précises, afin de minimiser les effets d'inductance. Or, ces règles ne sont pas toujours maîtrisées par les installateurs.

En outre, dans les installations connues de ce type, indépendamment de l'utilisation d'un fusible ou d'un disjoncteur, la signalisation dépend du mode de défaillance de la varistance. Ainsi, si la varistance entre en emballement thermique, la signalisation s'effectue sur le parafoudre, du fait que le déconnecteur thermique entre en fonction. Si par contre la varistance se met en court-circuit franc, suite à l'écoulement d'un courant de foudre, alors l'élément de protection contre les court-circuits déconnecte la varistance provoquant, soit la fusion du fusible, soit le déclenchement du disjoncteur.

Dans le premier cas, le fusible fond et aucune signalisation n'est effectuée, alors que l'installation n'est plus protégée. Il serait donc nécessaire ici de rajouter un dispositif de signalisation supplémentaire, qui rendrait l'installation plus complexe et plus coûteuse.

Dans le deuxième cas, le déclenchement du disjoncteur est uniquement signalé par la position de sa manette d'armement et là encore une signalisation supplémentaire rendrait l'installation plus complexe et plus coûteuse. De plus, la signalisation par la position de la manette n'attire pas forcément l'oeil, en particulier si le disjoncteur n'est pas installé à proximité immédiate du parafoudre.

Les inconvénients ci-dessus sont dus à deux redondances dans l'installation, à savoir qu'il existe deux fonctions d'ouverture du circuit qui ne sont pas liées et qu'il existe également deux fonctions de signalisation qui ne sont pas non plus liées, à savoir la signalisation du parafoudre et celle par la manette du disjoncteur.

La présente invention a pour but de pallier ces inconvénients en proposant un ensemble de protection contre les surtensions dues à la foudre permettant de réaliser une déconnexion thermique et la protection contre les court-circuits tout en assurant de manière fiable la signalisation de son état de fonctionnement.

A cet effet, l'ensemble de protection contre les surtensions dues à la foudre conforme à l'invention est selon la revendication 1 ou selon la revendication 4.

Le document EP-A-0046545 décrit un ensemble de protection selon le préambule de la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est un schéma électrique d'un ensemble de protection;
la figure 2 est une vue en perspective représentant un montage de l'ensemble suivant la figure 1 ;
la figure 3 est une vue en plan d'une variante de réalisation de l'ensemble suivant la figure 2 ;
la figure 4 est un schéma électrique analogue à celui de la figure 1 d'une variante de réalisation de l'ensemble conforme à l'invention ;
la figure 5 est une représentation analogue à celle de la figure 2 de l'ensemble de la figure 4 ;
la figure 6 est un schéma électrique d'une autre variante de réalisation de l'invention, et
les figures 7 et 8 représentent deux autres variantes de réalisation selon le schéma électrique de la figure 6.

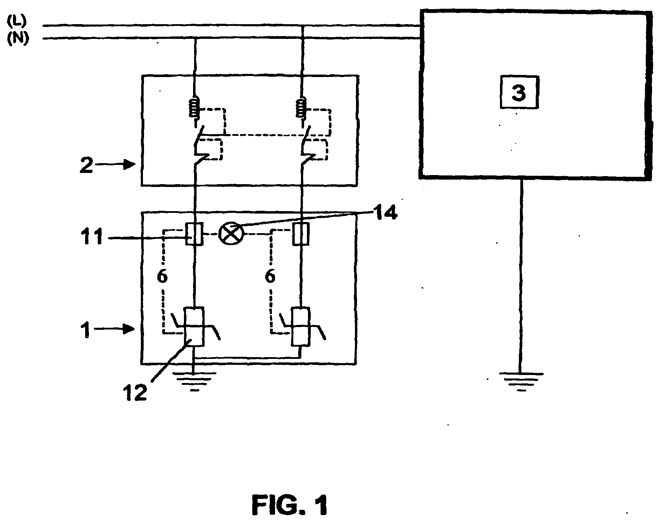

La figure 1 des dessins annexés représente, à titre d'exemple, un ensemble de protection contre les surtensions dues à la foudre, qui est constitué, conformément à l'invention, par une combinaison d'un bloc parafoudre 1 et d'un disjoncteur 2 reliés en un ensemble constructif compact.

Le schéma selon la figure 1 représente un disjoncteur 2 muni de deux pôles protégés reliés à un bloc parafoudre 1 bipolaire. L'ensemble est monté en amont d'une installation à protéger 3 sur des conduites d'alimentation (L et N) issues, par exemple, d'un disjoncteur de branchement non représenté. La représentation selon le schéma de la figure 1 convient donc à une installation monophasée mais le principe selon l'invention est adaptable à des installations électriques présentant d'autres caractéristiques (régime de neutres, monophasé, ou triphasé).

Le bloc parafoudre 1 comporte essentiellement un déconnecteur thermique 11, une varistance 12 et un moyen de signalisation visuelle 14 disposés dans une cartouche 15 embrochable électriquement et mécaniquement dans le socle du bloc 1.

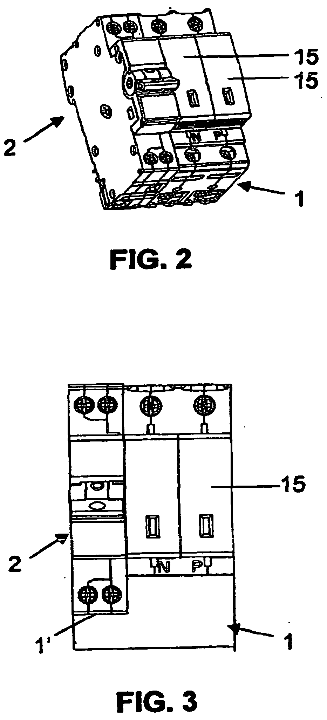

La figure 2 des dessins annexés représente, en perspective, un assemblage mécanique et électrique correspondant au mode de réalisation suivant le schéma de la figure 1. Dans ce mode de réalisation, les connexions électriques entre le bloc parafoudre 1 et le disjoncteur 2 ne sont pas représentés, mais sont réalisés de manière connue par l'intermédiaire de barrettes de connexion ou de câbles.

La figure 3 des dessins annexés représente une variante de réalisation du montage suivant la figure 2, dans laquelle le bloc parafoudre 1 est avantageusement pourvu d'un moyen intégré de connexion électrique et mécanique faisant corps avec ledit bloc 1 et présentant un décrochement de forme l'muni d'au moins un moyen de raccordement électrique et/ou mécanique destiné à coopérer électriquement avec une extrémité du disjoncteur 2, ledit disjoncteur 2 se logeant dans le décrochement de forme 1' contre le bloc parafoudre 1.

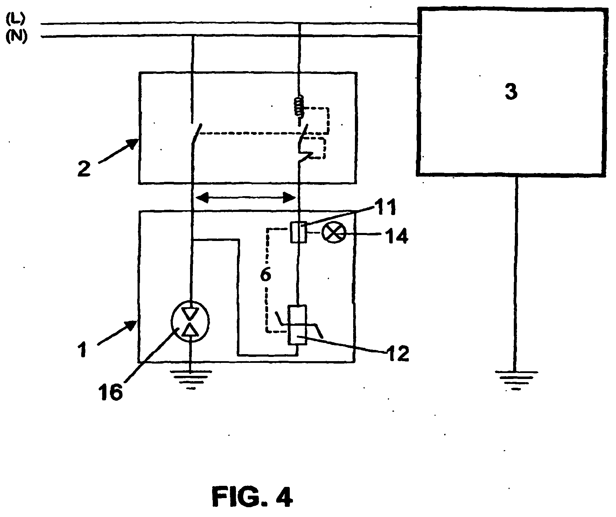

La figure 4 des dessins annexés représente un mode de réalisation de l'invention, dans lequel le bloc parafoudre 1 comporte, en outre, un éclateur 16 et est couplé à un disjoncteur 2 présentant un seul pôle protégé. Dans ce mode de réalisation la branche parafoudre neutre (N)-Terre, qui comporte l'éclateur 16, dont la fin de vie n'est pas un court-circuit, ne nécessite ni déconnecteur thermique, ni déconnecteur contre les court-circuits. Le fait d'utiliser un pôle non protégé au niveau du disjoncteur 2 permet l'obtention d'une plus grande compacité de l'ensemble conforme à l'invention.

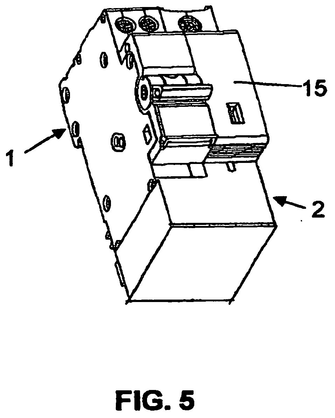

Un montage de l'ensemble mettant en oeuvre le schéma électrique selon la figure 4 est représenté à la figure 5 des dessins annexés. Dans ce mode de réalisation, le bloc parafoudre 1 ne comporte plus qu'une seule cartouche 15 incorporant la varistance et le déconnecteur thermique associé, l'éclateur pouvant, dans ce cas de figure, être logé dans le bloc 1. Cette possibilité de logement de l'éclateur 16 dans le bloc 1 est due au fait que ledit bloc 1 ne nécessite plus de cage de connexion à vis sur son côté de connexion électrique au disjoncteur, par coopération de forme.

En outre, le mode de réalisation selon les figures 4 et 5 permet aussi d'assurer une protection différentielle entre phase et neutre.

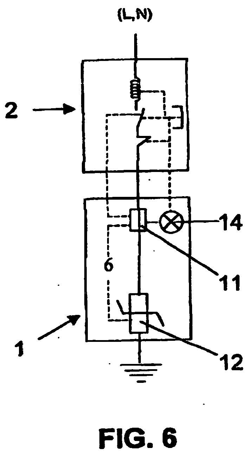

La figure 6 des dessins annexés représente un autre mode de réalisation de l'invention, dans lequel l'ensemble de protection comporte deux fonctions d'ouverture du circuit qui sont liées, ainsi que deux fonctions de signalisation également liées. Ainsi, il est possible d'intégrer dans le même ensemble les fonctions de déconnexion thermique et de court-circuit, ainsi qu'une signalisation, visuelle ou à distance, de fin de vie du parafoudre, dépendante à la fois de la fonction déconnexion thermique et de la fonction protection contre les court-circuits du parafoudre et de la canalisation et une fonction d'ouverture du circuit, à savoir des contacts de la serrure du disjoncteur 2 ou autre, dépendante à la fois de la fonction déconnexion thermique et de la fonction protection contre les court-circuits.

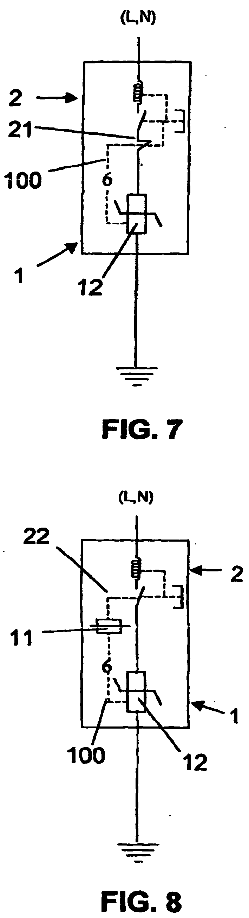

Les figures 7 et 8 des dessins annexés représentent deux schémas électriques possibles d'application du mode de réalisation selon le schéma de la figure 6.

Ainsi, dans le mode de réalisation selon la figure 7, l'élément thermique 21 ou bilame du disjoncteur 2 est relié thermiquement à la varistance 12 du bloc parafoudre 1 par une liaison thermique 100. Ainsi, même si le bilame 21 du disjoncteur 2 ne subit pas une déviation suffisante lorsqu'il est traversé par les courants apparaissant lors de l'emballement thermique de la varistance 12, la liaison thermique entre ladite varistance 12 et le bilame ou élément thermique 21 engendre une déviation suffisante pour provoquer le déclenchement de la serrure du disjoncteur 2. Le bilame du disjoncteur 2 ne transporte pas forcément un courant, de sorte qu'il n'entraîne pas de contrainte particulière de réalisation et que les coûts correspondants n'en sont pas affectés.

Dans le mode de réalisation selon la figure 8, le déconnecteur thermique 11 du bloc parafoudre 1 est relié à la varistance 12 par l'intermédiaire d'une liaison thermique 100 et est constitué par une soudure basse température coopérant avec un moyen mécanique 22 sous forme d'une lame élastique déclenchant la serrure du disjoncteur 2 après fusion du déconnecteur thermique 11.

La lame élastique formant le moyen mécanique 22 peut, par exemple, être encastrée par une extrémité et être soudée par son autre extrémité sur le déconnecteur thermique 11, de sorte que, lors de la fusion de ce dernier, l'extrémité libérée de la lame peut se déplacer élastiquement pour heurter un ergot de déclenchement de la serrure du disjoncteur 2. La fusion du déconnecteur thermique 11 peut être réalisée sous l'effet de la chaleur d'un emballement thermique de la varistance 12.

Grâce à l'invention, il est possible de réaliser un ensemble de protection contre les surtensions dues à la foudre de construction compacte et permettant d'obtenir une signalisation cohérente, tout en assurant la continuité du service et en étant d'installation aisée.

Par ailleurs, l'invention permet une optimisation de l'utilisation du disjoncteur qui peut spécialement être conçu pour réaliser les fonctions de protection thermique contre les court-circuits et de déconnexion thermique, de sorte que les performances de l'ensemble sont améliorées, notamment en termes de tension résiduelle, la longueur de câblage étant sensiblement réduite et la chute de tension étant optimisée lors de l'écoulement d'un courant de foudre.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection des revendications.

## Revendications

1. Ensemble de protection contre les surtensions dues à la foudre, constitué par une combinaison d'un bloc parafoudre (1) et d'un disjoncteur (2) reliés en un ensemble constructif compact,
le bloc parafoudre (1), comportant essentiellement un déconnecteur thermique (11), une varistance (12), un moyen de signalisation visuelle (14) et un éclateur (16), **caractérisé en ce que**
le bloc parafoudre (1) est couplé au disjoncteur (2) en un ensemble constructif compact, le déconnecteur thermique (11), la varistance (12) et le moyen de signalisation visuelle (14) étant disposés dans une cartouche (15) embrochable électriquement et mécaniquement dans le socle du bloc (1), et **en ce que**
ledit bloc parafoudre (1) est pourvu d'un moyen intégré de connexion électrique et mécanique faisant corps avec ledit bloc (1) et présente un décrochement de forme (1') muni d'au moins un moyen de raccordement électrique et mécanique destiné à coopérer électriquement avec une extrémité du disjoncteur (2),
ledit disjoncteur (2) se logeant dans le décrochement de forme (1') contre le bloc parafoudre (1),
ledit ensemble réalisant la protection contre les courts-circuits des parafoudres à base de varistance.

2. Ensemble, suivant la revendication 1, **caractérisé en ce que** le disjoncteur (2) présente un seul pôle protégé.

3. Ensemble, suivant la revendication 1, **caractérisé en ce que** le bloc parafoudre (1) comporte une seule cartouche (15) incorporant la varistance (12) et le déconnecteur thermique associé (11), l'éclateur (16) étant logé dans le bloc (1).

4. Ensemble de protection contre les surtensions dues à la foudre, constitué par une combinaison d'un bloc parafoudre (1) et d'un disjoncteur (2) reliés en un ensemble constructif compact,
le bloc parafoudre (1), comportant essentiellement un déconnecteur thermique (11), une varistance (12), un moyen de signalisation visuelle (14) et un éclateur (16), **caractérisé en ce que**
le bloc parafoudre (1) est couplé au disjoncteur (2) en un ensemble constructif compact, le déconnecteur thermique (11), la varistance (12) et le moyen de signalisation visuelle (14) étant disposés dans une cartouche (15) embrochable électriquement et mécaniquement dans le socle du bloc (1), **et en ce que**
il comporte deux fonctions d'ouverture du circuit qui sont liées,
à savoir, d'une part, une protection contre les courts-circuits qui protège l'ensemble de l'installation en aval contre une fin de vie dangereuse du parafoudre sous forme d'un court-ciruit franc et qui déconnecte dans un tel cas ledit parafoudre de l'installation pour assurer la continuité de service de celle-ci, et, d'autre part, une protection thermique qui déconnecte la varistance lors d'un emballement thermique dû au vieillissement et à l'augmentation du courant de fuite de la varistance,
ainsi que deux fonctions de signalisation également liées.

5. Ensemble, suivant la revendication 4, **caractérisé en ce qu'**il intègre les fonctions de déconnexion thermique et de court-circuit, ainsi qu'une signalisation, visuelle ou à distance, de fin de vie du parafoudre, dépendante à la fois de la fonction déconnexion thermique et de la fonction protection contre les court-circuits du parafoudre et de la canalisation et une fonction d'ouverture du circuit, à savoir des contacts de la serrure du disjoncteur (2) ou autre, dépendante à la fois de la fonction déconnexion thermique et de la fonction protection contre les court-circuits.

6. Ensemble, suivant l'une quelconque des revendications 4 et 5, **caractérisé en ce qu'**un élément thermique (21) ou bilame du disjoncteur (2) est relié thermiquement à la varistance (12) du bloc parafoudre (1) par une liaison thermique (100).

7. Ensemble, suivant l'une quelconque des revendications 4 et 5, **caractérisé en ce que**, le déconnecteur thermique (11) du bloc parafoudre (1) est relié à la varistance (12) par l'intermédiaire d'une liaison thermique (100) et est constitué par une soudure basse température coopérant avec un moyen mécanique (22) sous forme d'une lame élastique déclenchant la serrure du disjoncteur (2) après fusion du déconnecteur thermique (11).

## Patentansprüche

1. Schutzvorrichtung gegen durch Blitzschlag verursachte Überspannungen, bestehend aus einer Kombination aus einem Blitzschutzblock (1) und einem Schutzschalter (2), die zu einer kompakten Baueinheit verbunden sind, wobei der Blitzschutzblock (1) im Wesentlichen einen thermischen Trenner (11), einen Varistor (12), eine optische Signaleinrichtung (14) und eine Entladefunkenstrecke (16) umfasst,
**dadurch gekennzeichnet,**
**dass** der Blitzschutzblock (1) mit einem Schutzschalter (2) zu einer kompakten Baueinheit verbunden ist, wobei der thermische Trenner (11), der Varistor (12) und die optische Signaleinrichtung (14) in einer Kassette (15) angeordnet ist, die elektrisch und mechanisch in den Sockel des Blocks (1) steckbar ist, wobei der Blitzschutzblock (1) mit einem integrierten elektrischen und mechanischen Verbindungsmittel versehen ist, das einteilig mit dem genannten Block (1) ausgebildet ist, wobei der Blitzschutzblock (1) eine Aussparung (1') aufweist, die mit mindestens einem elektrischen und mechanischen Verbindungsmittel versehen ist, das dazu vorgesehen ist, elektrisch mit einer Seite des Schutzschalters (2) zusammenzuarbeiten, wobei der genannte Schutzschalter (2) in der Aussparung (1') an dem Blitzschutzblock (1) sitzt und wobei durch die Vorrichtung der Schutz vor Kurzschlüssen der varistorbasierten Blitzschütze erreicht wird.

2. Vorrichtung nach Anspruch 1,
**dadurch gekennzeichnet,**
**dass** der Schutzschalter (2) einen einzigen geschützten Pol aufweist.

3. Vorrichtung nach Anspruch 1,
**dadurch gekennzeichnet,**
**dass** der Blitzschutzblock (1) eine einzige Kassette (15) enthält, in der der Varistor (12) und der zugehörige thermische Schutzschalter (11) eingebaut sind, wobei die Entladefunkenstrecke (16) in dem Block (1) angeordnet ist.

4. Schutzvorrichtung gegen durch Blitzschlag verursachte Überspannungen, bestehend aus einer Kombination aus einem Blitzschutzblock (1) und einem Schutzschalter (2), die zu einer kompakten Baueinheit verbunden sind, wobei der Blitzschutzblock (1) im Wesentlichen einen thermischen Schutzschalter (11), einen Varistor (12), eine optische Signaleinrichtung (14) und eine Entladefunkenstrecke (16) umfasst,
**dadurch gekennzeichnet,**
**dass** der Blitzschutzblock (1) mit dem Schutzschalter (2) zu einer kompakten Baueinheit verbunden ist, wobei der thermische Trenner (11), der Varistor (12) und die optische Signaleinrichtung (14) in einer Kassette (15) angeordnet sind, die elektrisch und mechanisch in den Sockel des Blocks (1) steckbar ist, wobei die Schutzvorrichtung ferner zwei Funktionen der Öffnung des Schalters umfasst, die miteinander verbunden sind, und zwar einerseits einen Schutz vor Kurzschlüssen, die die gesamte nachgelagerte Installationseinrichtung vor einem gefahrbringenden Ende der Lebensdauer des Blitzschutzes in Form eines satten Kurzschlusses schützt und den Blitzschutz in genanntem Fall von der Anlage trennt, um den Fortbestand des Betriebs derselben sicherzustellen, und andererseits einen thermischen Schutz, der den Varistor bei einer thermischen Instabilität aufgrund der Alterung und der Erhöhung des Verluststroms des Varistors trennt, sowie zwei ebenfalls verbundene Signalisierungsfunktionen aufweist.

5. Vorrichtung nach Anspruch 4,
**dadurch gekennzeichnet,**
**dass** sie die Funktionen der thermischen Trennung und des Kurzschlusses, sowie einen visuell oder fernwirkenden Signalgeber für das Ende der Lebensdauer des Blitzschutzes, der gleichzeitig von der Funktion thermische Trennung und der Funktion Sicherung gegen Kurzschlüsse des Blitzschutzes und des Leitungsnetzes abhängig ist, und eine Funktion der Öffnung des Schaltkreises, nämlich Kontakte des Schaltschlosses des Schutzschalters (2) oder andere, die gleichzeitig von der Funktion thermische Trennung und der Funktion Sicherung gegen Kurzschlüsse abhängen, integriert.

6. Vorrichtung nach einem der Ansprüche 4 und 5,
**dadurch gekennzeichnet,**
**dass** ein thermisches Element (21) oder ein Bimetallplättchen des Schutzschalters (2) durch eine thermische Verbindung (100) mit dem Varistor (12) des Blitzschutzblockes (1) thermisch verbunden ist.

7. Vorrichtung nach einem der Ansprüche 4 oder 5,
**dadurch gekennzeichnet,**
**dass** der thermische Trenner (11) des Blitzschutzblocks (1) mit dem Varistor (12) über eine thermische Verbindung (100) verbunden ist und aus einer Niedertemperaturlötstelle besteht, die mit einer mechanischen Vorrichtung (22) in Form eines elastischen Metallplättchens, das das Schloss des Schutzschalters (2) nach dem Schmelzen des thermischen Trenners (11) auslöst, zusammenwirkt.

## Claims

1. Assembly providing protection against overvoltage caused by lightning, consisting of a combination of a lightning arrester block (1) and a circuit breaker (2) connected to form a compact constructional assembly, wherein the lightning arrester block (1) comprises essentially a thermal disconnector (11), a varistor (12), a visual display means (14) and a spark gap (16), **characterised in that**
the lightning arrester block (1) is coupled to the circuit breaker (2) to form a compact constructional assembly, the thermal disconnector (11), the varistor (12) and the visual display means (14) being arranged in a cartridge (15) which can be plugged electrically and mechanically into the base of the block (1), and **in that**
said lightning arrester block (1) is provided with an integrated electrical and mechanical connection means which is incorporated into said block (1) and has a recess (1') provided with at least one electrical and mechanical connection means intended to cooperate electrically with an end of the circuit breaker (2),
said circuit breaker (2) being accommodated in the recess (1') against the lightning arrester block (1),
said assembly providing protection against short-circuits of the lightning arresters based on varistor.

2. Assembly according to claim 1, **characterised in that** the circuit breaker (2) has a single protected pole.

3. Assembly according to claim 1, **characterised in that** the lightning arrester block (1) comprises a single cartridge (15) incorporating the varistor (12) and the associated thermal disconnector (11), the spark gap (16) being accommodated in the block (1).

4. Assembly providing protection against overvoltage caused by lightning, consisting of a combination of a lightning arrester block (1) and a circuit breaker (2) connected to form a compact constructional assembly,
the lightning arrester block (1) comprising essentially a thermal disconnector (11), a varistor (12), a visual display means (14) and a spark gap (16), **characterised in that**
the lightning arrester block (1) is coupled to the circuit breaker (2) to form a compact constructional assembly, the thermal disconnector (11), the varistor (12) and the visual display means (14) being arranged in a cartridge (15) which can be plugged electrically and mechanically into the base of the block (1), and **in that**
it comprises two functions for opening the circuit which are connected, firstly a function providing protection against short-circuits which protects the whole installation downstream against a dangerous end of life of the lightning arrester in the form of a clear short-circuit and which disconnects in such a case said lighting arrester from the installation to ensure continuity of service thereof, and secondly a thermal protection function which disconnects the varistor in case of thermal runaway due to the ageing and the increase in the leakage current of the varistor,
as well as two signalling functions, which are also connected.

5. Assembly according to claim 4, **characterised in that** it integrates the thermal disconnection and short-circuit functions, as well as visual or remote signalling of end of life of the lightning arrester, which is dependent upon both the thermal disconnection function and the function providing protection against short-circuits of the lightning arrester and the cables, and a function for opening the circuit, i.e. contacts of the switching lock of the circuit breaker (2) or the like, which function is dependent upon both the thermal disconnection function and the function providing protection against short-circuits.

6. Assembly according to either claim 4 or 5, **characterised in that** a thermal element (21) or bimetallic strip of the circuit breaker (2) is thermally connected to the varistor (12) of the lightning arrester block (1) by a thermal connection (100).

7. Assembly according to one of claims 4 and 5, **characterised in that** the thermal disconnector (11) of the lightning arrester block (1) is connected to the varistor (12) via a thermal connection (100) and consists of a low-temperature weld cooperating with a mechanical means (22) in the form of a resilient blade triggering the locking of the circuit breaker (2) after fusion of the thermal disconnector (11).
